Europäisches Patentamt

European Patent Office

Office européen des brevets

(19)

(11) EP 0 507 316 B1

(12) EUROPEAN PATENT SPECIFICATION

(45) Date of publication and mention
of the grant of the patent:
31.01.1996 Bulletin 1996/05

(51) Int Cl.⁶: **G02B 27/28**, G02B 5/30,
G02F 1/1335

(21) Application number: 92105775.8

(22) Date of filing: 03.04.1992

(54) **Polarizing element and image display apparatus having the polarizing element**

Polarisierendes Element und Bildanzeigegerät mit diesem polarisierenden Element

Elément polarisant et dispositif d'affichage d'image comportant cet élément polarisant

(84) Designated Contracting States:
DE FR GB IT NL

(30) Priority: 05.04.1991 JP 73126/91
24.05.1991 JP 120054/91

(43) Date of publication of application:
07.10.1992 Bulletin 1992/41

(73) Proprietor: CANON KABUSHIKI KAISHA
Tokyo (JP)

(72) Inventors:
• **Kimura, Kazumi, c/o Canon Kabushiki Kaisha**
**Ohta-ku, Tokyo 146 (JP)**
• **Mitsutake, Hideaki,**
**c/o Canon Kabushiki Kaisha**
**Ohta-ku, Tokyo 146 (JP)**

(74) Representative:
**Pellmann, Hans-Bernd, Dipl.-Ing. et al**
**D-80336 München (DE)**

(56) References cited:
EP-A- 0 397 263          FR-A- 2 658 925
US-A- 3 522 985

• **PATENT ABSTRACTS OF JAPAN vol. 13, no.**
**089 (P-836)2 March 1989, & JP A 63271313**
• **PATENT ABSTRACTS OF JAPAN vol. 9, no. 199**
**(P-380)16 August 1985, & JP A 60063503**

# Description

## BACKGROUND OF THE INVENTION

### Field of the Invention

The present invention relates to a polarizing element comprising the features of the pre-characterizing clause of claim 1, and an image display device and, a projector incorporating the polarizing element.

A polarizing element comprising the features of the pre-characterizing clause of claim 1 is known from JP-A-63 271 313.

### Related Background Art

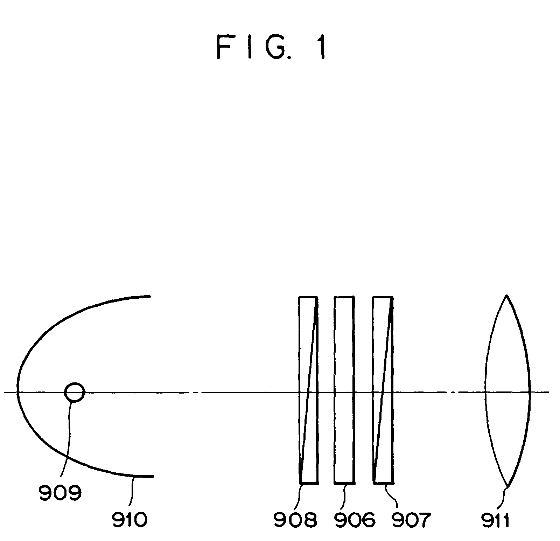

Fig. 1 illustrates a liquid crystal projector as an example of an apparatus using the polarized light. Random light emitted from a lamp 909 is condensed by a reflector 910 and converted into a linearly polarized light by a polarizer 908. The liquid crystal device (hereinafter abbreviated to LCD) 906 is illuminated with this linearly polarized light. The LCD 906 modulates the polarizing direction of the linearly polarized light. Image information is detected by an analyzer 907, and thereafter this image light is projected on an screen (unillustrated) through a projection lens 911.

In general, inexpensive polarizing plates are used as the polarizer 908 and the analyzer 907. In addition, those using polarizing beam splitters have been also proposed.

In any case, however, a half of the incident random light is lost due to the polarizer. Hence, there arises such a problem that a photo utilizing efficiency is bad. To cope with this, it is known from, for example, JP-A-63271313 to construct a polarizing element such that the random light is separated into two linearly polarized lights by means of a polarizing beam splitter, a polarizing direction of one polarized light being rotated to match with a polarizing direction of the other polarized light, and both polarized lights being utilized as illumination light.

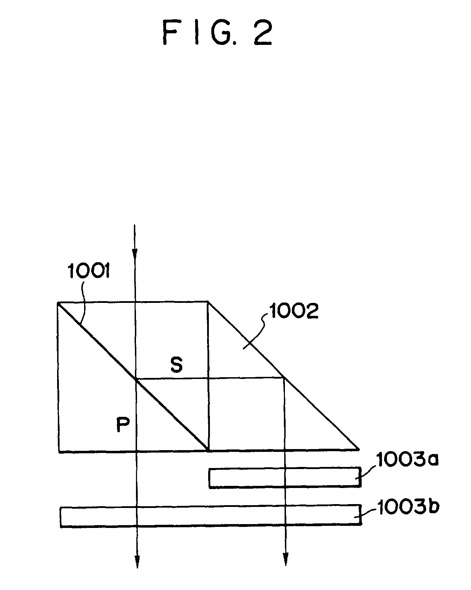

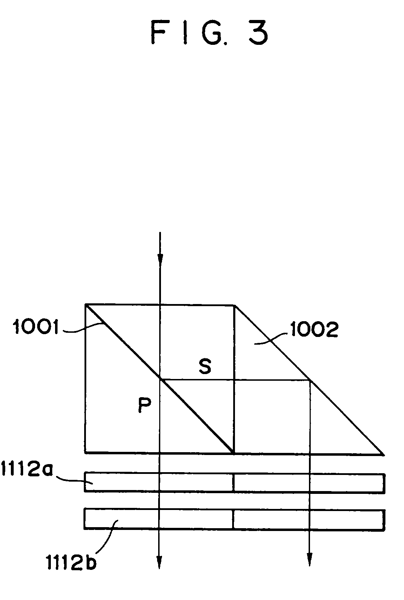

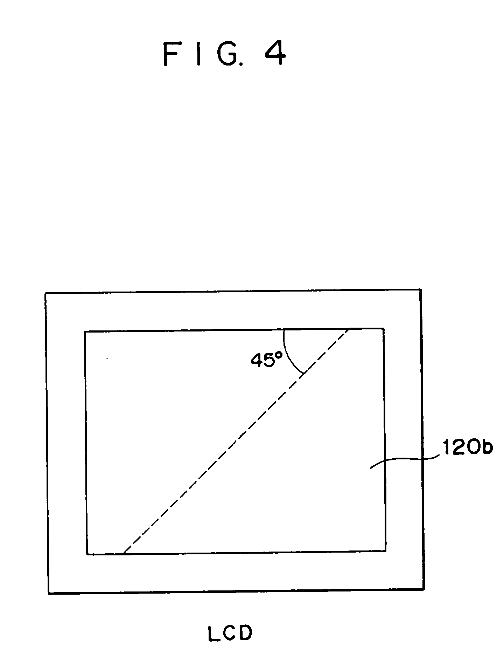

The direction of polarization of the linearly polarized light used as the illumination light is made to coincide with an orientating direction of liquid crystal molecules of the LCD. The orientating direction of the LCD liquid crystal is typically, as illustrated in Fig. 4, set at substantially 45° to an end portion of the LCD. It is because the contrast is enhanced when inclining the orientating direction of the liquid crystal to the end portion of the LCD. For instance, Figs. 2 and 3 demonstrate methods, as thinkable ones, of inclining the polarizing direction of the linearly polarized light emitted from the polarizing element. Referring to Fig. 2, a half-wave ($\lambda/2$) plate is incorporated into the example of the above-mentioned polarizing element. The random light is separated into two linearly polarized lights S, P through a multi-layered film 1001 of the polarizing beam splitter. The S-polarized light is diverted by a total reflection surface of a rectangular prism 1002 in the same traveling direction with the P-polarized light. Thereafter, a polarizing direction thereof is rotated by a $\lambda/2$ plate 1003a in the same direction with the P-polarized light. The two polarized lights in which the traveling directions and the polarizing directions are made coincident each other in this way are then caused to be incident on a $\lambda/2$ plate 1003b. The polarizing direction of the two polarized lights can be thereby inclined in a direction depending on the optical axis of the $\lambda/2$ plate 1003b.

Fig. 3 shows an example where quarter-wave ($\lambda/4$) plate is used in place of the $\lambda/2$ plate. The steps where the S-polarized light is diverted by the total reflection surface of the rectangular prism 1002 in the same traveling direction with the P-polarized light are the same as those shown in Fig. 2. However, $\lambda/4$ plates 1112a are disposed on the optical paths of two beams of polarized light so that the two beams of polarized light respectively become circularly polarized light. Further, $\lambda/4$ plates 1112b are disposed so that the two beams of circularly polarized light become predetermined linearly polarized light.

However, the polarizing elements depicted in Figs. 2 and 3 present the following problems.

In any case, at least one luminous flux has to penetrate a plurality of phase plates, and hence a loss of light quantity due to the surface reflections of the phase plates increases. Besides, the plate exhibits a wavelength dependency. Therefore, where the polarizing direction of wide band light such as white light is changed into a certain state, and if, for instance, the phase plate is designed with respect to a wavelength of G component of the white light, the phases for the B-and-R components having different wavelengths from that of the G component can not be shifted by the same quantity with the G component. Hence, although the polarizing direction of a large part of the G component may be set in a predetermined state, the polarizing directions of a great majority of the B-and-R components may not be, set to such the state.

The polarizing element is defined as an element for supplying light assuming a specific polarizing direction, and therefore it follows that the light which does not assume this polarizing direction is not utilized. Consequently, because of the wavelength dependency of the phase plate, a large proportion of the B-and-R components are lost. Besides, the light from the above-mentioned element assumes a green color. Such a loss and coloring augment depending on the number of passages through the phase plates. As illustrated in Figs. 2 and 3, this problem therefore becomes conspicuous in a mode to effect the passages through a plurality of phase plates. Especially in Fig. 2, the number of passages through the phase plates is different between the two beams of polarized light. This causes a difference in light quantity therebetween and an imbalance in terms of color. Additionally, where the plurality of phase plates are provided, the costs increases, correspondingly. Besides, angular matching of the optical axes of the phase plates becomes strict, and the manufacturing steps are also complicated.

## SUMMARY OF THE INVENTION

It is an object of the present invention to provide a polarizing element in which a loss of light quantity is reduced and to provide a correspondingly improved image display device and projector.

According to one aspect of the present invention, there is provided the polarizing element according to claim 1.

According to a second aspect of the invention, there is provided the image display device according to claim 7.

According to a third aspect of the invention, there is provided the projector according to claim 8.

## BRIEF DESCRIPTION OF THE DRAWINGS

Other objects and advantages of the present invention will become apparent during the following discussion taken in conjunction with the accompanying drawings, in which:

Fig. 1 is an explanatory view of a conventional example;
Fig. 2 is an explanatory view of a conventional example;
Fig. 3 is an explanatory view of a conventional example;
Fig. 4 is a diagram illustrating an orientation of molecules of a typical LCD;
Fig. 5 is a block diagram showing an embodiment of the present invention;
Fig. 6 is a view of assistance in explaining optical path in the polarizing element shown in Fig. 5;
Fig. 7 is a view of assistance in explaining a $\lambda/2$ plate in the polarizing element of Fig. 5;
Fig. 8 is a view of assistance in explaining the operation of the $\lambda/2$ plate;
Fig. 9 is a view of assistance in explaining the operation of the $\lambda/2$ plate in the polarizing element of Fig. 1;
Fig. 10 is a block diagram showing another embodiment of the present invention;
Fig. 11 is a block diagram showing still another embodiment of the present invention;
Fig. 12 is a block diagram illustrating a liquid crystal projector using the polarizing element according to the present invention;
Fig. 13 is a block diagram depicting a part of a further embodiment of the present invention; and
Fig. 14 is a block diagram illustrating a part of still a further embodiment of the present invention.

## DETAILED DESCRIPTION OF THE PREFERRED EMBODIMENTS

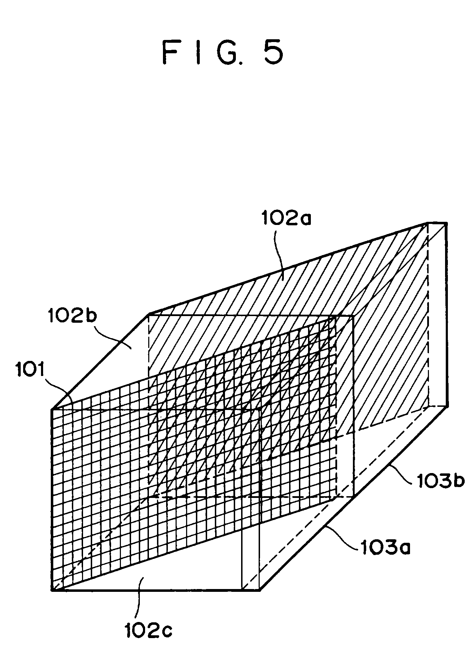

Fig. 5 illustrates an embodiment of the present invention. A film 101 is provided on a bonding portion between rectangular prisms 102b, 102c. The film 101 is formed of a multi-layered film or the like such as a metal thin film and incorporates a function to separate unpolarized random light into two beams of linearly polarized light components orthogonal to each other. A unit generally known as a polarizing beam splitter is constructed by the prisms 102b, 102c and the film 101. The polarizing beam splitter is defined as means for separating the incident light into two linearly polarized lights.

A rectangular prism 102a is so provided as to be contiguous to the prism 102b or bonded thereto. The prism 102a has a bottom face (indicated by oblique lines) by which the polarized light penetrating the film 101 of the prism 102b and travelling forwards is totally reflected. The reflected polarized light is thereby directed to an optical path parallel to an optical path of the polarized light reflected by the film 101. This prism 102a serves as means for causing the traveling directions of two beams of polarized light to be coincident each other.

$\lambda/2$ plates 103a, 103b are so provided as to tightly contact the prisms 102a, 102c on a path of the light emerging from the prisms 102a, 102c. Optic axes (also referred to as optical axis) of the $\lambda/2$ plates 103a, 103b are set to make an angle of 45° to each other. The $\lambda/2$ plates 103a, 103b are means for arranging the polarizing directions of two beams of polarized light in an arbitrary direction.

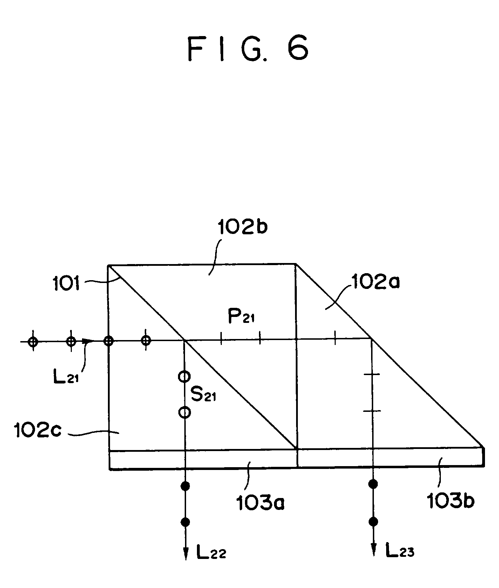

The operation of this embodiment will be described with reference to Figs. 6 through 9.

To start with, optical paths are illustrated in Fig. 6. This Figure is a view taken from above in Fig. 5. In the same embodiment, the like symbols represent the same components. The symbols L, P, S designate beams of light.

Incident light $L_{21}$ is, as depicted in the Figure, incident perpendicularly on the surface of the prism 102c from the left side. This incident light $L_{21}$ is random light but unpolarized. The incident light $L_{21}$ travels through the prism 102c and reaches the film 101. The film 101 is designed to the random light incident thereon with angle of 45° such that only light component having a polarized direction perpendicular to the paper surface of the figure is reflected while light component having a polarized direction parallel to the paper surface is transmitted therethrough. The polarized light reflected therefrom is referred to as S-polarized light, while the polarized light transmitted through the film is referred to as P-polarized light. In the Figure, these beams of polarized light are indicated by $S_{21}$, $P_{21}$, respectively.

Traveling directions of the polarized light $S_{21}$ and of the incident light $L_{21}$ are perpendicular to each other. The polarized light $S_{21}$ reflected by the film 101 is emitted from an exit surface of the prism 102c. This exit surface is provided with a $\lambda/2$ plate 103a. The polarized light $S_{21}$ transmits through the $\lambda/2$ plate 103a. At this time, the polarizing direction of the polarized light $S_{21}$ is, though perpendicular both to the paper surface and to the traveling direction, rotated about an arrow of the traveling direction, thereby becoming a beam of light $L_{22}$. A function of the $\lambda/2$ plate will hereinafter be described.

On the other hand, the polarized light $P_{21}$ transmitted through the film 101 travels into the prism 102b. The polarized light $P_{21}$ is incident on the prism 102a adjacent to an exit surface of the prism 102b and totally reflected by an oblique surface of the prism 102a. Further, an exit surface of the prism 102a is provided with a $\lambda/2$ plate 103b. The polarized light $P_{21}$ passes through the $\lambda/2$ plate 103b. At this moment, the polarizing direction of the incident light $P_{21}$ is, though parallel to the paper surface but perpendicular to the traveling direction, rotated about an arrow of the traveling direction, thereby becoming a beam of light $L_{23}$.

One of points of the present invention is that the optical axes of the $\lambda/2$ plates 103a, 103b are set such that the polarizing directions of the light $L_{23}$ and the light $L_{22}$ are made coincident each other.

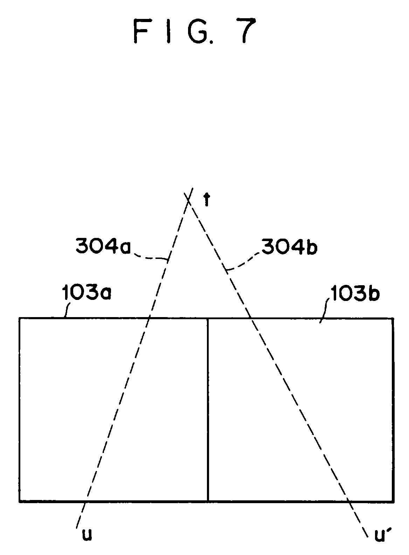

Fig. 7 is a view when observing the $\lambda/2$ plates 103a, 103b from a direction of the exit surface. Broken lines 304a, 304b indicate directions of the optical axes of the $\lambda/2$ plates 103a, 103b. The symbols u, u', t denote arbitrary points on the optical axes, and t designates an intersection of the broken lines 304a, 304b.

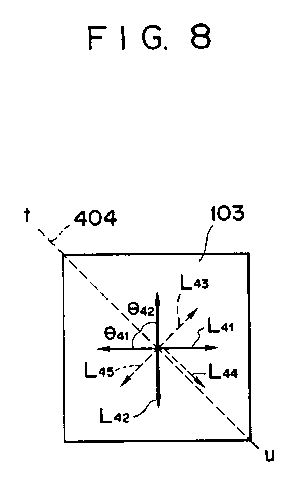

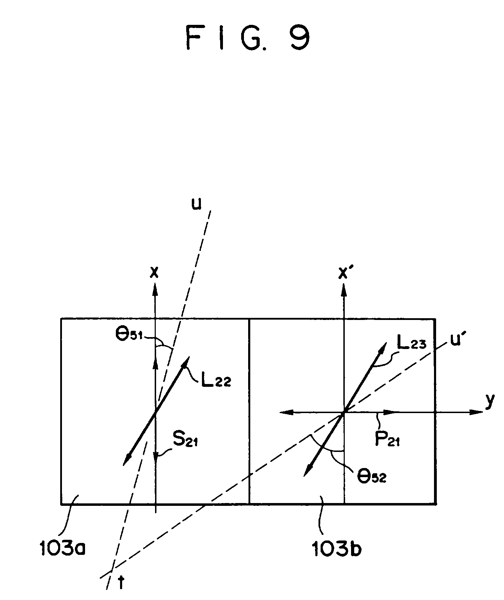

According to the present invention, the $\lambda/2$ plates 103a, 103b are designed so that $\angle utu'$ (angle defined by points u, t and u') = 45°. In accordance with this embodiment configured so that $\angle utu' = 45°$, the beams of exit light - e.g., the lights L22 and L23 in Fig. 6 - are emitted to assume the same polarizing direction. The reason for this will be elucidated with reference to Figs. 8 and 9.

Fig. 8 is a diagram of assistance in explaining the function of the $\lambda/2$ plate. The $\lambda/2$ plate, which is as a kind of phase plate, is manufactured by polishing a double refraction crystal such as crystal, calcite, etc.. The square $\lambda/2$ plate 103 has tu which is referred to as an optical axis 404.

Where a linearly polarized light $L_{41}$ oscillating in a direction $\theta_{41}$ from the optical axis 404 is now incident, it can be considered such that the incident light may be separated into two linearly polarized light components, i.e., a polarized light (extraordinary ray) $L_{44}$ oscillating in a direction tu and a polarized light (ordinary ray) $L_{43}$ oscillating perpendicularly in the direction tu. An arrowed direction is the oscillating direction, viz., the polarizing direction. If an extraordinary ray refractive index $n_e$ is larger than an ordinary ray refractive index $n_o$, the optical path length of the extraordinary ray $L_{44}$ is longer than that of the ordinary ray. The $\lambda/2$ plate is arranged such that a phase difference is caused between the two rays after passing therethrough in this manner, and this phase difference is set to $\pi$ (1/2 wavelength). For this reason, the two rays become beams of light $L_{44}$, $L_{45}$ after the

passage, and hence the exit light becomes a linearly polarized light $L_{42}$. The lights $L_{43}$, $L_{45}$ have the same amplitude, and hence $\theta_{41} = \theta_{42}$. Namely, the angle between the optical axis and the polarized diretion of the polarized light before being incident on the $\lambda/2$ plate are made equal to the angle between the optical axis and the polarized direction of the polarized light after exited from the $\lambda/2$ plate. Generally, the $\lambda/2$ plate, as described above, undergoes the incidence of the linearly polarized light having a polarized direction of 45° to the optical axis and emits the light whose polarized direction has rotated by 90°.

A means for arranging the polarizing directions according to the present invention will be explained referring to Fig. 9. Illustrated additionally in Fig. 9 to those of Fig. 7 are virtual reference axes x, x', y, incident lights $S_{21}$, $P_{21}$ and exit lights $L_{22}$, $L_{23}$. The axes x, x' are perpendicular to the axis y. The incident lights $S_{21}$, $P_{21}$ respectively indicate the S-polarized light and P-polarized light, which are the same as $S_{21}$, $P_{21}$ shown in Fig. 6. The polarized lights travel perpendicular to the paper surface from the side beyond the paper surface. $\theta_{52} - \theta_{51} = \angle utu'$ (angle defined by points u, t and u', where $\theta_{51}$ is the magnitude of angle constituted by lines tu and x, and $\theta_{52}$ is the magnitude of angle constituted by lines tu' and x'.

The explanation begins with 103a. The magnitude of angle made by the optical axis tu and the incident light $S_{21}$ is $\theta_{51}$, and therefore, as explained earlier, the magnitude of angle made by the optical axis tu and the exit light $L_{22}$ is also $\theta_{51}$. Hence, a magnitude of angle made by y and the exit light $L_{22}$ is given by $(90 - 2 \times \theta_{51})$.

Next, 103b will be described. A magnitude of angle made by the optical axis tu' and the incident light $P_{21}$ is expressed such as $(90 - \theta_{52})$, and therefore, as stated before, a magnitude of angle made by the optical axis tu' and the exit light $L_{23}$ is also expressed such as $(90 - \theta_{52})$. Hence, an angle made by the axis y and the exit light $L_{23}$ is given by $\{2 \times (90 - \theta_{52})\}$.

The exit light $L_{22}$ and the exit light $L_{23}$ may be collimated for arranging these beams in the same direction, and hence

$$90 - 2 \times \theta_{51} = 2 \times (90 - \theta_{52})$$

Namely

$$\theta_{52} - \theta_{51} = 45$$

From this and above-mentioned matters, the angular magnitude of $\angle utu'$ is equal to 45°. Namely, when making 45° by the two optical axes tu and tu', this implies that the polarizing directions are coincident each other.

The incident light defined as the random light can be generated by a combination of a conventional lamp and a parabolic reflector. According to the present invention, as obvious from the embodiment discussed above, the exit surface is twice as wide as the incident surface, and hence an aperture of the reflector can be diminished.

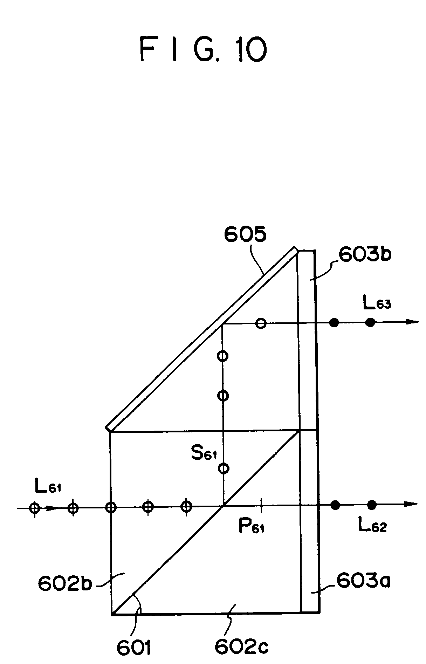

Another embodiment is demonstrated by Fig. 10.

The symbols 601, 602b, 602c correspond to 101, 102b, 102c. The symbols 601, 602b, 602c designate means for separating the random light into two linearly polarized lights, i.e. a so-called polarizing beam splitter. Incident random light $L_{61}$ is separated into two linearly polarized light $S_{61}$, $P_{61}$ by means of 601. The light S61 is conceived as linearly polarized light assuming a polarized direction perpendicular to the paper surface, while the light $P_{61}$ is conceived as linearly polarized light assuming a polarized direction parallel to the paper surface but perpendicular to the traveling direction.

A mirror 605 is means for causing the traveling directions of two polarized lights to be coincident each other. The mirror 605 makes an angle of 45° to the exit surface of the prism 602b. An edge of the mirror contacts a right-angled edge of the prism 602b. This mirror is obtained by polishing an aluminum material or coating a glass material with a multi-layered thin film. A reflectivity thereof preferably approximates to 100 %. If the reflectivity is small, there arises a possibility of causing a difference in light quantity between the exit light $L_{63}$ and the exit light $L_{62}$. In this case, a light reducing element such as an ND filter is provided on the optical path of the exit light $L_{62}$, thereby equalizing the light quantities of the beams of exit light $L_{63}$, $L_{62}$.

$\lambda/2$ plates 603a, 603b correspond to 103a, 103b and are means for aligning the polarizing directions of two polarized lights. The function thereof is as described above. The two polarized light $P_{61}$, $S_{61}$ pass through the $\lambda/2$ plates 603a, 603b, whereby these beams are emitted as exit light $L_{62}$, $L_{63}$ assuming the same polarized direction.

In case of insufficient accuracy of a joining portion between the mirror 605 and the rectangular prism 602b and also insufficient accuracy of a joining portion between the $\lambda/2$ plates 603a, 603b, there appear in some cases splices of illumination light on a body illuminated with the beams of exit light $L_{62}$, $L_{63}$. In this case, the angle made by the mirror 60 and the rectangular prism 602b is not set at 45° but may be adjusted several times. For instance, if set to be smaller than 45°, at least a part of the exit light $L_{63}$ is overlapped with the exit light $L_{62}$, with the result that the splices are not conspicuous. Further, a wedge-like glass element is provided on the optical path of the exit light $L_{63}$, at least a part of the exit light $L_{63}$ is overlapped with the exit light $L_{62}$ with the intention of making the splices inconspicuous. Similarly, the wedge-like glass element may be provided on the optical path of the exit light $L_{62}$ or on the optical paths both of $L_{62}$ and of $L_{63}$.

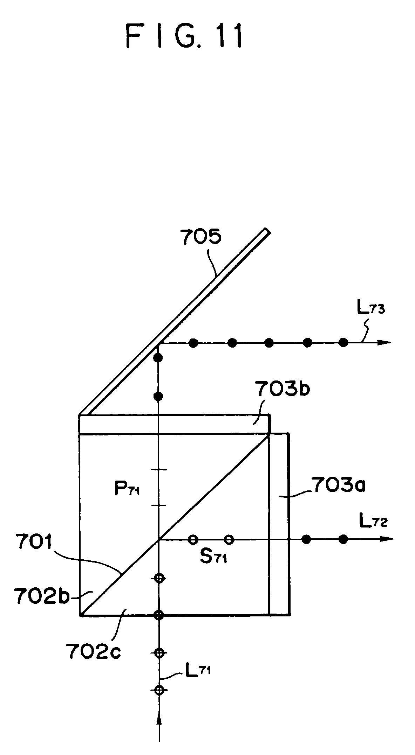

Still another embodiment is demonstrated by Fig. 11. The symbols 701 to 705, $L_{71}$ to $L_{73}$, $S_{71}$ and $P_{71}$ correspond to 601 to 605, $L_{61}$ to $L_{63}$, $S_{61}$ and $P_{61}$, respectively.

In the above-described two embodiments, the incident natural light is separated into two linearly polarized lights, and the polarized directions are aligned after aligning the traveling directions.

In accordance with this embodiment, the incident light is separated into two linearly polarized lights, and the polarized directions are aligned in the same direction when observing them from the illuminated body, and thereafter the traveling directions are aligned.

A $\lambda/2$ plate 703b is so provided as to tightly contact with a rectangular prism 702b. Incident light $L_{71}$ is separated by 701 into two linearly polarized light $P_{71}$, $S_{71}$ which are emitted from the prisms 702c, 702b and simultaneously transmit through the $\lambda/2$ plates 703a, 703b, respectively. At this moment, the polarized directions of the two polarized lights $P_{71}$, $S_{71}$ are rotated about the traveling direction, thereby aligning the polarizing directions when being viewed from the illuminated body.

Optical axes of the $\lambda/2$ plates 703a, 703b are set to make an angle of 45° to each other when being projected along the optical path on the illuminated body.

In the case of this embodiment, the $\lambda/2$ plate 703b is interposed between the mirror 705 and the rectangular prism 702b. Hence, there is a possibility where the splices become conspicuous on the illuminated body illuminated with the beams of exit light $L_{72}$, $L_{73}$. In this case, as described above, the splices are made inconspicuous so as to overlap the beams of exit light $L_{72}$, $L_{73}$.

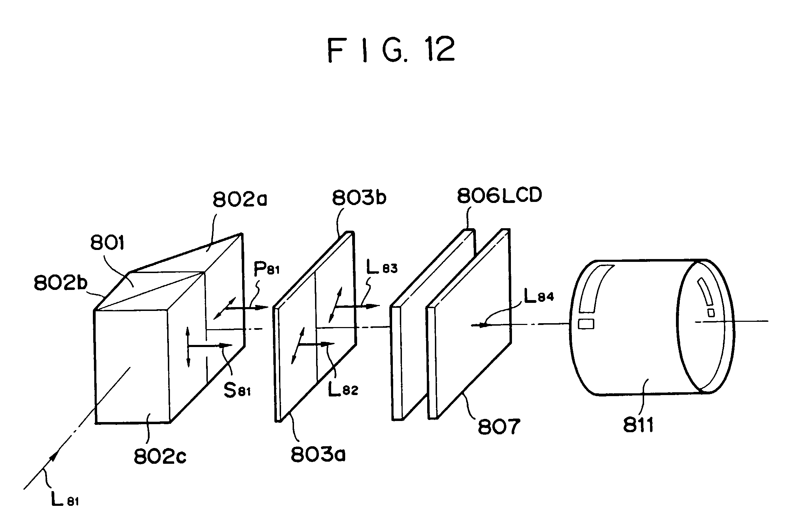

Fig. 12 illustrates a projector using the polarizing element according to this invention. The numerals 801 to 803 correspond to 101 to 103. These components are means for separating incident random light $L_{81}$ into two linearly polarized light $S_{81}$, $P_{81}$ and for causing the traveling directions and polarizing directions to be respectively coincident. Two-sided arrows with which the linearly polarized lights $S_{81}$, $P_{81}$ are marked indicate the polarizing directions.

The linearly polarized lights $S_{81}$, $P_{81}$ transmit through the $\lambda/2$ plates 803a, 803b, thereby becoming linearly polarized lights $L_{82}$, $L_{83}$ whose polarized directions are coincident each other. This will hereinafter be explained.

The linearly polarized lights L82, L83 are incident upon an LCD 806. The LCD 806 is, as in the same way with the conventional example, constructed such that an orientation of the crystal is inclined to the end of the LCD by 45°. This LCD is separated into a multiplicity of pixels. Further, a multiplicity of liquid crystal molecules are arrayed in the respective pixels. In accordance with input signals, the array of the liquid crystal molecules varies per pixel, and an image modulation is effected by rotating the polarizing direction of the polarized light. The light undergoing the image modulation is detected as necessary optical information $L_{84}$ by means of an analyzer 807. The light is then projected on an unillustrated screen by a projection lens 811. The analyzer 807 involves the use of a polarizing plate, a polarizing beam splitter and the like.

A light source is not illustrated in this embodiment. However, as in the prior arts, a combination of the lamp and the reflector or a laser CRT may be thinkable as a light source.

A color projector may be provided by following manner.

Interposed also between the $\lambda/2$ plate 803 and the LCD 806 is color separating means which employs a material such as a dichroic film or halogram exhibiting a wavelength selectivity, for separating the white light into respective color components R, G, B. The LCDs are provided corresponding to the respective color components R, G, B. A color synthesizing means for synthesizing the respective color components R, G, B which have undergone the image modulations by the LCDs is disposed between the LCD 806 and the analyzer 807 or between the analyzer 807 and the projection lens 808. A color projector is thus attainable. Besides, the effects may be exhibited not only by the 3-color separate synthesization of R, G, B but also 2-color or multicolor separate synthesization.

The following is an explanation of the $\lambda/2$ plates 803a, 803b with reference to Fig. 9.

The $\lambda/2$ plates 803a, 803b correspond to 103a, 103b. In addition, the polarized directions of the polarized lights $S_{81}$, $P_{81}$, $L_{82}$, $L_{83}$ corresponds to those of $S_{21}$, $P_{21}$, $L_{22}$, $L_{23}$.

In the LCD 806, the liquid crystal is oriented in a direction inclined at 45 degrees to the end portion of the LCD shown in the conventional example. Therefore, the linearly polarized light assuming such the polarized direction is required. Namely, the polarized directions of two linearly polarized lights $S_{21}$, $P_{21}$ orthogonal to each other are respectively rotated by 45°, and the optical axis of the $\lambda/2$ plate is set so that these beams are emitted as $L_{22}$, $L_{23}$. Consequently, a required illumination of the linearly polarized light can be obtained.

As obvious from Fig. 9, if $2\theta_{51} = 45°$ and $2(90° - \theta_{52}) = 45°$, the beams of light $S_{21}$, $P_{21}$ are rotated through 45°, thereby becoming $L_{22}$, $L_{23}$. At this moment, $\theta_{51} = 22.5°$ and $\theta_{52} = 67.5°$. This, as explained before, satisfies the angle utu' = $\theta_{52} - \theta_{51} = 45°$, where utu' is the angle made by the two optical axes.

Note that the present invention is not limited to the embodiments discussed above. A variety of constructions are, as a matter of course, possible within a range which does not depart from the gist of the invention. For example, the two luminous fluxes from the polarizing illumination system are not necessarily parallel to each other. An angle made by the two luminous fluxes may be given by changing the angle of the total reflection surface of the rectangular prism 102a of Fig. 1 or the angles at which the mirrors 605, 705 are inclined or disposing a wedge-like glass element in at least one optical path. Further, as means for separating the incident light into two linearly polarized light, i.e., the P-polarized light and the S-polarized light, the following members may be employed separately depending on the purposes. These members are not only the polarizing beam splitter shown herein but also a double refractive lens made of an optically uniaxial material represented by an embodiment which will be described later. These members further include those capable of separating the incident light into a pair of polarized light beams orthogonal to each other such as a Glan-Thompson prism, a Wollaston prism and a Rochon prism.

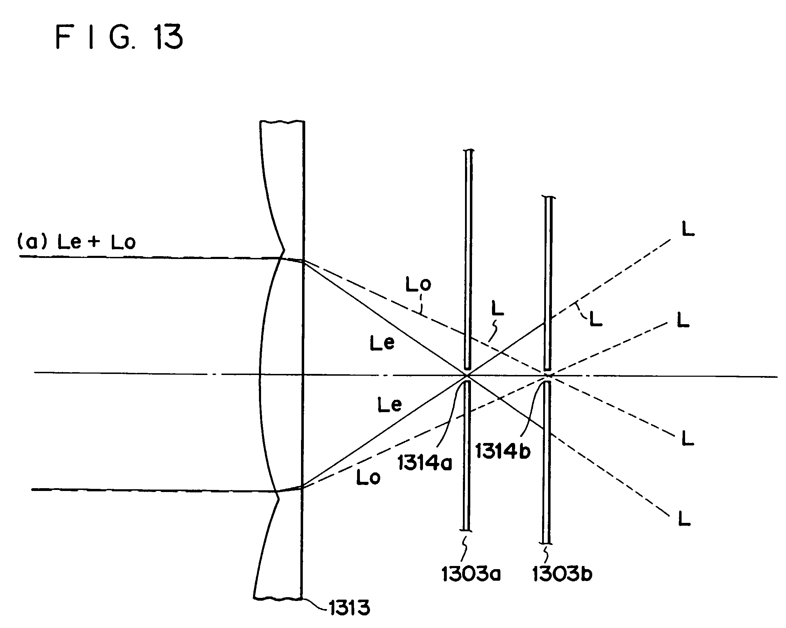

Fig. 13 is a sectional view depicting a part of another embodiment of the polarizing element acording to the present invention.

Designated at 1313 is a lens array in which a plurality of cylindrical lenses each composed of an optical material exhibiting a double refractivity are arranged within the same plane. Indicated at 1303a, 1301b are $\lambda/2$ plates each made of an optically active substance.

The cylindrical lens 1313 is composed of the optical material exhibiting the double refractivity to have an ordinary ray refractive index $n_o$ in an intra-paper-surface-direction and an extraordinary ray refractive index $n_e$ in a direction perpendicular to the paper surface.

The incident surface has a curvature of $1/r$, while the exit surface is plane. In such a condenser lens, a focal distance is given approximatively by $f_o = r/(n_o - 1)$ with respect to the normal ray and by $f_e = r/(n_e - 1)$ with respect to the extraordinary ray. In accordance with this embodiment, $n_e > n_o$.

Of parallel beams (a) of the random light, luminous fluxes of component assuming the intra-paper-surface polarizing direction are condensed at a position of the focal distance $f_o$ as normal rays, while luminous fluxes of component assuming the polarizing direction perpendicular to the paper surface are condensed at a position of the focal distance $f_e$ as extraordinary rays.

The $\lambda/2$ plate 1303a has a slit 1314a disposed in the condensing position of an extraordinary ray Le. On the other hand, the $\lambda/2$ plate 1303b has a slit 1314b disposed in the condensing position of an ordinary ray Lo. These slits 1314a, 1314b serve to eliminate the optical rotatory power on the respective extraordinary and ordinary rays of the $\lambda/2$ plates 1303a, 1303b.

The optical axis of the $\lambda/2$ plate 1303a is set at 22.5° to the paper surface. For this reason, the ordinary ray Lo undergoes action of the $\lambda/2$ plate 1303a when passing through the $\lambda/2$ plate 1303a and thereby becomes a linearly polarized light L assuming such a polarizing direction as to make 45 degrees to the paper surface. On the other hand, the extraordinary ray Le passes through the slit 1314a and therefore undergoes no action of the $\lambda/2$ plate 1303a.

The optical axis of the $\lambda/2$ plate 1303b makes an angle of 67.5 degrees to the paper surface and set at 45 degrees to the optical axis of the $\lambda/2$ plate 1303a. For this reason, the extraordinary ray Le undergoes the action of the $\lambda/2$ plate 1303b when passing through the $\lambda/2$ plate 1303b and thereby becomes a linearly polarized light L assuming such a polarizing direction as to make 45 degrees to the paper surface as in the same way with the ordinary ray Lo. On the other hand, the ordinary ray Lo which has previously been subjected to the action of the $\lambda/2$ plate 1303a travels through the slit 1314b and therefore undergoes no action of the $\lambda/2$ plate 1303b.

As shown above, if the optical axes of the $\lambda/2$ plates 1303a, 1303b are set to make substantially 45 degrees when being viewed from the side of the exit light, both the extraordinary ray and the ordinary ray can be converted into linearly polarized lights assuming the same polarizing direction. Thereafter, when the optical axes of the $\lambda/2$ plates 1303a, 1303b are set within the range which does not depart from the conditions thereof, it is possible to obtain the linearly polarized light assuming a desired polarized direction other than the polarized direction which makes 45 degrees to the paper surface as shown in this embodiment.

This embodiment deal with the luminous fluxes of incidence as a plurality of luminous fluxes, wherein the luminous flux is incident per unit element. When increasing the number of divisions, an effect of reduction in size can be expected. Hence, a distance from the light source to the LCD can be decreased, thereby improving a condensing efficiency of the illumination light.

Besides, the respective gaps between the members 1313, 1303a, 1303b are presumed as air gaps. However, glass or the like is sealed thereinto to form these members into one united body. Alternatively, a fly eye lens may be used in place of the cylindrical lens 1313. In this case, however, 1314a, 1314b will be not the slits but pin-holes. Further, as a matter of course, it is possible to adopt such a mode that the cylindrical lens 1313 is not arrayed but may be constructed as a single birefringence lens.

In accordance with this embodiment, the exit surface of the cylindrical lens is formed as a plane surface. However, the incident surface may be plane, and a lenticular lens having curved surfaces on both sides may also be employed. In addition, a Fresnel lens may be used as a condensing means which employs the optical element exhibiting the double refractivity. The polarizing element in this embodiment is constructed as a compact plate type element and is therefore suitable for the projector. Besides, the polarizing element can be, because of its being compact, provided per LCD corresponding to each color of a color projector. The $\lambda/2$ plate having the wavelength dependency can be constructed for every color, and hence it is feasible to increase a photo utilizing efficiency and actualize a good color reproducibility.

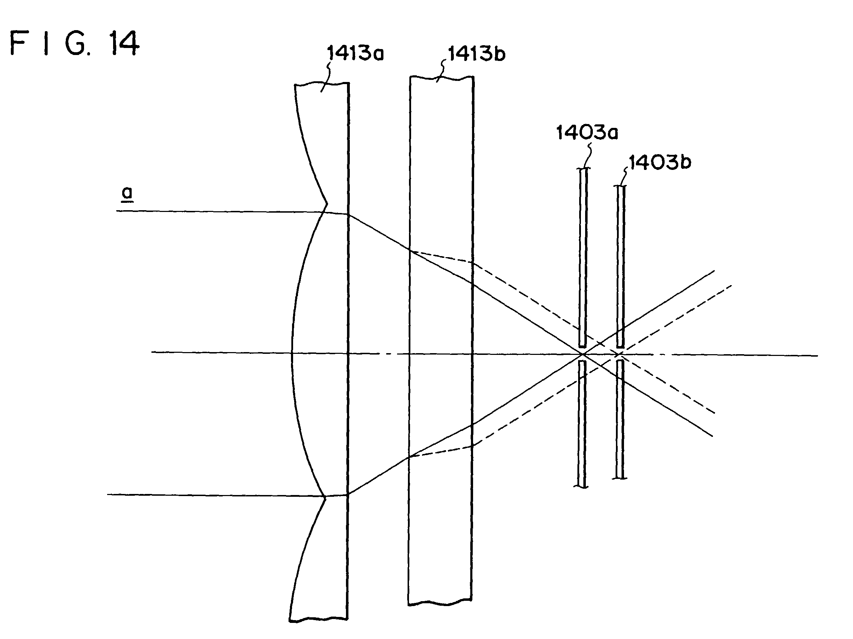

Fig. 14 is a sectional view showing a part of still another embodiment of the polarizing element according to the present invention.

In this embodiment, a lens array 1413a and a double refractive plate 1413b are employed as a condensing means using the optical element exhibiting the double refractivity in the polarizing illumination system. $\lambda/2$ plates 1403a, 1403b are the same as those in the previous embodiment. A lens array 1413a is a lens made of an isotropy optical material having a refractive index n; and its focal distance is expressed such as $f = r/(n-1)$, where the curvature of the incident surface is given by $1/r$. On the other hand, the double refractive plate 1413b is composed of a double refractive optical material to have an ordinary ray refractive index $n_o$ in the intra-paper-surface direction and an extraordinary ray refractive index $n_e$ in the direction perpendicular to the paper surface. An incident luminous flux (a) is condensed by means of the lens array 1413a, wherein the focal distance $f = r/(n - 1)$. Because of providing the complex refractive plate 1413b, a condensing position deviates by $\Delta o = d (1 - 1/n_o)$ with respect to the ordinary ray on the exit side and by $\Delta e = d (1 - 1/n_e)$ with respect to the extraordinary ray on the exit side (where d is the thickness of the double refractive plate 1413b). The $\lambda/2$ plates 1403a, 1403b each formed with a slit or pin-hole are disposed in the respective focusing positions.

The operation of this embodiment is the same as that of the preceding embodiment, and the description thereof is omitted. According to the present invention, it is not required that the double refractive member is processed anew into a lens array, and hence the costs can be reduced. In the embodiments discussed above, the polarized directions are rotated by transmitting two linearly polarized lights through the $\lambda/2$ plate. However, a $\lambda/4$ plate admits two linearly polarized lights and again transmits the light via a reflection member, so that the exit light whose polarizing direction is rotated can be obtained. Namely, in this case, the light beams are caused to transmit the $\lambda/4$ plate twice through the reflection member, thereby giving the same function as that of the $\lambda/2$ plate. Further, the same effects are acquired not only by the phase plate but also by other substances such as a liquid crystal exhibiting the optical rotatory power. The present invention is applicable to all devices such as an automobile head light requiring the linearly polarized light other than devices such as a liquid crystal printer head using a liquid crystal-optical shutter in which the LCD is irradiated with the light.

As explained above, according to the present invention, the polarized directions of two linearly polarized light can be matched with the orientating direction of the liquid crystal by use of a single phase plate for one optical path. It is therefore possible to obtain the polarized illumination light having a good photo utilizing efficiency in an arbitrary polarized direction. Besides, the number of factors for matching the angle of the optical axis of the phase plate during the manufacturing process is decreased. The color imbalance and the surface reflection of the phase plate can be minimized. This in turn makes it possible to obtain the polarizing element the costs of which are reduced more remarkably than in the prior arts.

The projector according to the present invention, presents such merits that the LCD can be illuminated with the linearly polarized light assuming the polarized direction having the angle optimal to the orientation of the liquid crystal and other various conditions; and the bright image with a high contrast but with no ununiformity can be provided.

Although the illustrative embodiments of the present invention have been described in detail with reference to the accompanying drawings, it is to be understood that the present invention is not limited to those embodiments. Various changes or modifications may be effected therein by one skilled in the art without departing from the scope of the invention.

**Claims**

1. A polarizing element comprising:

    separating means (101,102b,102c;601,602b, 602c;701,702b,702c;801,802b,802c;1313;141 3a,1413b) for separating incident light into first linearly polarized light and second linearly polarized light, the directions of polarization of which are orthogonal to each other; and
    a first half-wave plate (103a;603a;703a;803a; 1303a;1403a) for rotating the polarized direction of said first linearly polarized light; characterized by
    a second half-wave plate (103b;603b;703b; 803b;1303b;1403b) for rotating the polarized direction of said second linearly polarized light, wherein said first and second half-wave plates are disposed so that the directions of the optical axes (304a,304b) of said first and second half-wave plates make an angle of 45 degrees with respect to each other.

2. A polarizing element according to claim 1, wherein said separating means includes reflecting means (101,102a;601,605;701,705;801,802a) for effecting the separation by transmitting said first linearly polarized light and reflecting said second linearly polarized light and collimating optical paths of said first linearly polarized light and said second linearly polarized light which have been separated.

3. A polarizing element according to claim 1, wherein said separating means (1313;1413a,1413b) consists of converging means for converging said first linearly polarized light and said second linearly polarized light on positions different from each other, said first and second half-wave plates (1303a, 1303b;1403a,1403b) are respectively formed with predetermined openings (1314a,1314b), and said first and second half-wave plates are disposed so that said respective openings are provided in said respective converging positions.

4. A polarizing element according to claim 3, wherein said converging means is composed of a lens array (1313) in which a plurality of elements each exhibiting a double refractivity are arrayed, and each of said first and second half-wave plates (1303a, 1303b) includes an array of openings (1314a, 1314b) corresponding respectively to said arrayed elements.

5. A polarizing element according to claim 3, wherein said converging means consists of a lens array (1413a) and a plate (1413b) exhibiting a double refractivity, and said first and second half-wave plates (1403a,1403b) include arrays of openings which correspond to said lens arrays.

6. A polarizing element according to any one of claims 1 to 5, wherein when a liquid crystal device (806) is illuminated with said first linearly polarized light and said second linearly polarized light whose polarized directions are coincident, optical axes of said first and second half-wave plates (803a,806) are set so that an orientating direction of liquid crystal molecules of said liquid crystal device substantially coincides with the directions of polarization of said first linearly polarized light and of said second linearly polarized light.

7. An image display device comprising:

    a polarizing element (801, 802a, 802b, 802c, 803a, 803b) as defined in claim 1; and
    image forming means ((806, 807) for forming an image by modulating the linearly polarized light received from said polarizing element.

8. A projector comprising:

    an image display device (801, 802a, 802b, 802c, 803a, 803b) as defined in claim 7; and
    projecting means (811) for projecting the image formed by said image display device.

9. A projector according to claim 8, wherein said image forming means (806,807) is constructed of three image forming units corresponding to three primary colors R, G and B, and wherein color separating means for separating the light from said light source into beams assuming said three primary colors R, G and B and for making said beams incident on said image forming units corresponding thereto are interposed between said image forming means and a light source emitting the light incident on said polarizing element.

10. A projector according to claim 9 further comprising : three polarizing elements as defined in claim 1 disposed on respective optical paths of the beams of said three primary colours R, G and B.

**Patentansprüche**

1. Polarisationselement, umfassend:

    Trenneinrichtungen (101, 102b, 102c; 601, 602b, 602c; 701, 702b, 702c; 801, 802b, 802c;

1313; 1413a, 1413b) zum Trennen von eintretendem Licht in erstes linear polarisiertes Licht und zweites linear polarisiertes Licht, dessen Polarisationsrichtungen senkrecht zu einander sind; und eine erste Halbwellenplatte (103a; 603a; 703a; 803a; 1303a; 1403a) zum Drehen der Polarisationsrichtung des ersten linear polarisierten Lichts;

**gekennzeichnet durch**

eine zweite Halbwellenplatte (103b; 603b; 703b; 803b; 1303b; 1403b) zum Drehen der Polarisationsrichtung des zweiten linear polarisierten Lichts, wobei die erste und zweite Halbwellenplatten so angeordnet sind, daß die Richtungen der optischen Achsen (304a, 304b) von der ersten und zweiten Halbwellenplatte einen Winkel von 45 Grad in bezug aufeinander bilden.

2. Polarisationselement nach Anspruch 1, bei dem die Trenneinrichtung Reflexionseinrichtungen (101, 102a; 601, 605; 701, 705; 801, 802a) umfaßt, um die Trennung zu bewirken, indem das erste linear polarisierte Licht transmittiert wird und das zweite linear polarisierte Licht reflektiert wird und die optischen Wege von dem ersten linear polarisierten Licht und dem zweiten linear polarisierten Licht, die getrennt worden sind, parallel gerichtet werden.

3. Polarisationselement nach Anspruch 1, bei dem die Trenneinrichtung (1313; 1413a, 1413b) aus Bündeleinrichtungen zum Bündeln des ersten linear polarisierten Lichts und des zweiten linear polarisierten Lichts auf voneinander verschiedenen Positionen besteht, wobei die erste und zweite Halbwellenplatte (1303a, 1303b; 1403a, 1403b) jeweils mit vorbestimmten Öffnungen (1314a, 1314b) gebildet sind und die erste und zweite Halbwellenplatte so angeordnet sind, daß die jeweiligen Öffnungen in den jeweiligen Bündelpositionen angeordnet sind.

4. Polarisationselement nach Anspruch 3, bei dem die Bündeleinrichtung aus einer Linsenanordnung (1313) zusammengesetzt ist, in der eine Vielzahl von Elementen, die jeweils Doppelbrechung zeigen, angeordnet sind, und jede der ersten und zweiten Halbwellenplatte (1303a, 1303b) eine Anordnung von Öffnungen (1314a, 1314b) umfaßt, die jeweils den angeordneten Elementen entspricht.

5. Polarisationselement nach Anspruch 3, bei dem die Bündeleinrichtung aus einer Linsenanordnung (1413a) und einer Platte (1413b), die Doppelbrechung zeigt, besteht und die erste und zweite Halbwellenplatten (1403a, 1403b) Anordnungen aus Öffnungen enthalten, die den Linsenanordnungen entsprechen.

6. Polarisationselement nach einem der Ansprüche 1 bis 5, bei dem, wenn eine Flüssigkristallvorrichtung (806) mit dem ersten linear polarisierten Licht und dem zweiten linear polarisierten Licht beleuchtet wird, deren Polarisationsrichtungen zusammenfallen, die optischen Achsen von der ersten und zweiten Halbwellenplatte (803a, 806) so eingestellt sind, daß eine Orientierungsrichtung der Flüssigkristallmoleküle der Flüssigkristallvorrichtung im wesentlichen mit der Polarisationsrichtung von dem ersten linear polarisierten Licht und dem zweiten linear polarisierten Licht zusammenfällt.

7. Bildanzeigevorrichtung, umfassend:

ein Polarisationselement (801, 802a, 802b, 802c, 803a, 803b) nach Anspruch 1; und Bilderzeugungseinrichtungen (806, 807) zum Erzeugen eines Bildes durch Modulieren des linear polarisierten Lichts, das von dem Polarisationselement erhalten worden ist.

8. Projektor, umfassend:

eine Bildanzeigevorrichtung (801, 802a, 802b, 802c, 803a, 803b) nach Anspruch 7; und Projektionseinrichtungen (811) zum Projizieren des durch die Bildanzeigevorrichtung erzeugten Bildes.

9. Projektor nach Anspruch 8, bei dem die Bilderzeugungseinrichtung (806, 807) aus drei Bilderzeugungseinheiten aufgebaut ist, die drei Grundfarben R, G und B entsprechen, und wobei Farbtrenneinrichtungen zum Trennen des Lichts von der Lichtquelle in Strahlen, die die drei Grundfarben R, G und B annehmen, und um die Strahlen auf die den drei Grundfarben entsprechenden Bilderzeugungseinheiten einfallen zu lassen, zwischen die Bilderzeugungseinrichtung und eine Lichtquelle, die das in das Polarisationselement eintretende Licht emittieren, dazwischengeschoben sind.

10. Projektor nach Anspruch 9, ferner umfassend: drei Polarisationselemente nach Anspruch 1, die auf den entsprechenden optischen Wegen der Strahlen der drei Grundfarben R, G und B angeordnet sind.

**Revendications**

1. Élément polarisant comprenant:

un moyen (101, 102b, 102c; 601, 602b, 602c; 701, 702b, 702c; 801, 802b, 802c; 1313; 1413a; 1413b) de séparation pour séparer une lumière incidente en une première lumière polarisée linéairement et une seconde lumière polarisée linéairement, dont les directions de polarisation sont orthogonales l'une à l'autre; et

une première lame (103a; 603a; 703a; 803a; 1303a; 1403a) demi-onde pour faire tourner la direction de polarisation de ladite première lumière polarisée linéairement, caractérisé par une seconde lame (103b; 603b; 703b; 803b; 1303b; 1403b) demi-onde pour faire tourner la direction de polarisation de ladite seconde lumière polarisée linéairement, lesdites première et seconde lames demi-onde étant disposées de façon que les directions des axes optiques (304a,304b) desdites première et seconde lames demi-onde forment un angle de 45° l'un par rapport à l'autre.

2. Élément polarisant selon la revendication 1, dans lequel ledit moyen de séparation comporte un moyen (101, 102a; 601, 605; 701, 705; 801, 802a) réfléchissant pour effectuer la séparation par transmission de ladite première lumière polarisée linéairement et par réflexion de ladite seconde lumière polarisée linéairement, et pour collimater les trajets optiques de ladite première lumière polarisée linéairement et de ladite seconde lumière polarisée linéairement qui ont été séparées.

3. Élément polarisant selon la revendication 1, dans lequel ledit moyen (1313; 1413a, 1413b) de séparation est constitué d'un moyen de convergence pour faire converger ladite première lumière polarisée linéairement et ladite seconde lumière polarisée linéairement sur des positions différentes l'une de l'autre, lesdites première et seconde lames (1303a, 1303b; 1403a, 1403b) demi-onde sont respectivement munies d'ouvertures (1314a, 1314b) prédéterminées, et lesdites première et seconde lames demi-onde sont disposées de façon que lesdites ouvertures respectives soient formées auxdites positions de convergence respectives.

4. Élément polarisant selon la revendication 3, dans lequel ledit moyen de convergence est composé d'une matrice (1313) de lentilles dans laquelle plusieurs éléments présentant chacun une double réfringence sont disposés en une matrice, et chacune desdites première et seconde lames (1303a, 1303b) demi-onde comporte une matrice d'ouvertures (1314a, 1314b) correspondant respectivement auxdits éléments agencés en matrice.

5. Élément polarisant selon la revendication 3, dans lequel ledit moyen de convergence est constitué d'une matrice (1413a) de lentilles et d'une lame (1413b) présentant une double réfringence, et lesdites première et seconde lames (1403a, 1403b) demi-onde comportent des matrices d'ouvertures qui correspondent auxdites matrices de lentilles.

6. Élément polarisant selon l'une quelconque des revendications 1 à 5, dans lequel, lorsqu'un dispositif (806) à cristal liquide est éclairé par ladite première lumière polarisée linéairement et par ladite seconde lumière polarisée linéairement dont les directions de polarisation coïncident, les axes optiques desdites première et seconde lames (803a, 806) demi-onde sont fixés de façon que la direction d'orientation des molécules de cristal liquide dudit dispositif à cristal liquide coïncide sensiblement avec les directions de polarisation de ladite première lumière polarisée linéairement et de ladite seconde lumière polarisée linéairement.

7. Dispositif d'affichage d'image comprenant:

un élément (801, 802a, 802b, 802c, 803a, 803b) polarisant tel que défini dans la revendication 1; et

un moyen (806, 807) de formation d'image pour former une image par modulation de la lumière polarisée linéairement reçue dudit élément polarisant.

8. Projecteur comprenant:

un dispositif (801, 802a, 802b, 802c, 803a, 803b) d'affichage d'image tel que défini dans la revendication 7; et

un moyen (811) de projection pour projeter l'image formée par ledit dispositif d'affichage d'image.

9. Projecteur selon la revendication 8, dans lequel ledit moyen (806, 807) de formation d'image est constitué de trois unités de formation d'image correspondant à trois couleurs primaires R, V et B, et dans lequel des moyens de séparation des couleurs pour séparer la lumière provenant de ladite source de lumière en des faisceaux présentant lesdites trois couleurs primaires R, V et B, et pour faire en sorte que lesdits faisceaux soient incidents sur lesdites unités de formation d'image en correspondance avec celles-ci, sont interposés entre ledit moyen de formation d'image et une source de lumière émettant la lumière incidente sur ledit élément polarisant.

10. Projecteur selon la revendication 9, comprenant en outre:

trois éléments polarisants tels que définis dans la revendication 1, disposés sur des trajets optiques respectifs des faisceaux desdites trois couleurs primaires R, V et B.

# F I G. 1

909

910

908 906 907 911

# F I G. 2

# F I G. 3

1001

1002

S

P

1112a

1112b

# F I G. 4

45°

120b

LCD

# F I G. 5

# F I G. 6

# F I G. 7

# FIG. 8

# FIG. 9

# F I G. 10

# F I G. 11

705

L₇₃

703b

703a

P₇₁

L₇₂

701

S₇₁

702b

702c

L₇₁

EP 0 507 316 B1

# F I G. 12

801
802b
802a
803b
806LCD
P₈₁
L₈₃
S₈₁
L₈₂
L₈₄
802c
803a
807
811
L₈₁

EP 0 507 316 B1

# F I G. 13

(a) Le + Lo

Lo

L

Le

Le

Lo

1314a    1314b

1303a    1303b

1313

L

L

L

L

L

F I G. 14